# EUROPÄISCHE PATENTANMELDUNG

(11) **EP 2 928 218 A1**
(43) Veröffentlichungstag der Anmeldung: **07.10.2015**
(21) Anmeldenummer: 14001181.8
(22) Anmeldetag: 31.03.2014
(51) Int. Cl.: H04W 4/02, H04W 4/00

(54) **Ortungssystem und Verfahren zur Bestimmung eines Bewegungsprofils eines Einkaufsbehältnisses in einem Ladengeschäft**

(71) Anmelder: Deutsche Telekom AG, 53113 Bonn (DE)
(72) Erfinder: Ruehl, Stefan Tobias, 64390 Erzhausen (DE); Verclas, Stephan, 68723 Plankstadt (DE); Hörnig, Jana, 73732 Esslingen (DE); Mallmann, Florian, 64521 Groß-Gerau (DE)
(74) Vertreter: Hössle Patentanwälte Partnerschaft

(57) **Zusammenfassung**

Die vorliegende Erfindung betrifft ein Ortungssystem zur Bestimmung eines Bewegungsprofils mindestens eines zur temporären Aufbewahrung einzukaufender Gegenstände geeigneten Einkaufsbehältnisses innerhalb eines Ladengeschäfts (1), wobei das mindestens eine Einkaufsbehältnis mit mindestens einem Transponder versehen ist, dessen Position von mindestens einem in dem Ladengeschäft (1) angeordneten Auslesesystem (14) dynamisch zu bestimmen ist, worüber das Bewegungsprofil mittels mindestens einer Auswerteeinheit abzuleiten ist. Ferner betrifft die vorliegende Erfindung ein entsprechendes Verfahren.

## Beschreibung

Die vorliegende Erfindung betrifft ein Ortungssystem zur Bestimmung eines Bewegungsprofils mindestens eines zur temporären Aufbewahrung einzukaufender Gegenstände geeigneten Einkaufsbehältnisses innerhalb eines Ladengeschäfts. Ferner betrifft die vorliegende Erfindung ein entsprechendes Verfahren.

Als Kundenstromanalyse wird eine Analyse von Bewegungen von Kunden in einem Einkaufsmarkt wie bspw. einer Supermarktfiliale bezeichnet. Dazu ist es notwendig, Daten zu sammeln, mit deren Hilfe es möglich ist, ein Bewegungsprofil eines jeweiligen Kunden innerhalb des Einkaufsmarktes abzubilden. Bislang werden Kundenstromanalysen in der Regel manuell durchgeführt. Das bedeutet, dass Mitarbeiter des Unternehmers manuell im Laden ein Kundenverhalten beobachten und protokollieren. Nachteile dieses Ansatzes sind ein damit verbundener hoher Aufwand und damit einhergehende hohe Kosten. Eine Bestimmung von Bewegungsprofilen mit Hilfe von in einem Einkaufsmarkt verteilt angeordneten Kameras ist nach den geltenden Daten- und Arbeitsschutzbestimmungen nicht zulässig.

Vor diesem Hintergrund, ist es eine Aufgabe der vorliegenden Erfindung, eine Möglichkeit vorzusehen, Bewegungsdaten von Kunden in einem Ladengeschäft zu bestimmen, anhand derer jeweilige Bewegungsprofile ermittelt werden können, die wiederum für eine weitergehende Analyse genutzt werden können.

Erfindungsgemäß wird dazu ein Ortungssystem mit den Merkmalen von Patentanspruch 1 sowie ein entsprechendes Verfahren mit den Merkmalen von Patentanspruch 11 bereitgestellt. Weitere mögliche Ausgestaltungen sind den jeweiligen Unteransprüchen zu entnehmen.

Erfindungsgemäß wird ein Ortungssystem zur Bestimmung eines Bewegungsprofils mindestens eines zur temporären Aufbewahrung einzukaufender Gegenstände geeigneten Einkaufsbehältnisses innerhalb eines Ladengeschäfts bereitgestellt, wobei das mindestens eine Einkaufsbehältnis mit mindestens einem Transponder versehen ist, dessen Position von mindestens einem in dem Ladengeschäft angeordneten Auslesesystem dynamisch zu bestimmen ist, worüber das Bewegungsprofil mittels mindestens einer Auswertereinheit abzuleiten ist.

Das erfindungsgemäße Ortungssystem dient dabei bspw. einem Inhaber des Ladengeschäftes, sein Ladengeschäft dahingehend zu optimieren, dass das Einkaufsverhalten eines jeweiligen Kunden verbessert werden kann. Das erfindungsgemäße Ortungssystem dient der voranstehend genannten Kundenstromanalyse auf Basis von Positionsdaten, wobei die Positionsdaten hier nicht Positionsdaten einzelner Kunden entsprechen, was dem Datenschutz entgegen stehen würde, sondern vielmehr Positionsdaten eines entsprechenden Einkaufsbehältnisses, das von einem jeweiligen Kunden genutzt wird, darstellen.

Bei dem Einkaufsbehältnis kann es sich um einen Einkaufswagen oder um einen Einkaufskorb handeln.

Im Rahmen der vorliegenden Offenbarung ist unter einem "Transponder" ein Funkkommunikationsgerät zu verstehen, das eingehende Signale aufnimmt und automatisch beantwortet bzw. weiterleitet. Man unterscheidet hier zwischen passiven Transpondern und aktiven Transpondern. Unter einem passiven Transponder ist ein System zu verstehen, das über keine eigene Stromversorgung verfügt und die zur Kommunikation benötigte Energie aus einem entsprechenden Feld einer entsprechenden Schreib- bzw. Leseeinheit bezieht. Dabei kann es sich bspw. um einen sogenannten RFID tag handeln. Dem gegenüber verfügt ein aktiver Transponder über eine eigene Energieversorgung. Diese kann entweder durch eine eingebaute Batterie oder durch Anschluss an ein externes Stromnetz realisiert sein. Im Rahmen der vorliegenden Offenbarung sind beide Arten von Transpondern für den Einsatz in dem erfindungsgemäßen Ortungssystem denkbar.

In einer möglichen Ausführungsform des erfindungsgemäßen Ortungssystem ist der Transponder ein RFID tag, dessen Kennung durch das mindestens eine Auslesesystem dynamisch auszulesen und darüber dessen Position dynamisch zu bestimmen ist. Über die Bestimmung der Position des Transponders, lässt sich, da der Transponder an dem Einkaufsbehältnis angeordnet ist, zunächst eine Position des Einkaufsbehältnisses bestimmen, und darüber indirekt auch eine Position eines jeweiligen Kunden, der sich des Einkaufsbehältnisses bedient, um in dem Ladengeschäft Gegenstände einzukaufen. Da der Kunde selbst aber nicht bspw. durch eine Kamera aufgenommen wird und darüber identifizierbar ist, ist durch das erfindungsgemäße Ortungssystem kein Verstoß gegen eine Datenschutzverordnung möglich.

Gemäß einer weiteren Ausführungsform des erfindungsgemäßen Ortungssystems stellt das mindestens eine Auslesesystem einen Teil der mindestens einen Auswerteeinheit dar bzw. einen integralen Bestandteil der mindestens einen Auswerteeinheit. Zumindest aber steht das mindestens eine Auslesesystem in kommunikativer Verbindung mit der Auswerteeinheit, um der mindestens einen Auswerteeinheit die von dem Auslesesystem aufgenommenen Positionsdaten zur weiteren Bearbeitung bzw. Auswertung zu übermitteln.

In einer weiteren Ausführungsform des erfindungsgemäßen Ortungssystems umfasst das erfindungsgemäße vorgesehene Auslesesystem mehrere Ausleseeinheiten, die bspw. durch jeweilige Sensoren realisiert sein können, die in dem Ladengeschäft in geeigneter Weise verteilt angeordnet sind. Bei dem Ladengeschäft kann es sich bspw. um eine Supermarktfiliale oder aber auch um jedes andere Geschäft handeln, in dem es sinnvoll erscheint, jeweilige Bewegungsprofile von darin befindlichen Kunden aufzunehmen.

In einer weiteren Ausführungsform des erfindungsgemäßen Ortungssystems umfasst das Ortungssystem ferner eine Speichereinheit, in der das Bewegungsprofil des mindestens einen Einkaufsbehältnisses abrufbar zu hinterlegen ist. Das bedeutet, dass alle oder zumindest ein Teil der mittels der mindestens einen Auswerteeinheit aus jeweiligen Positionsdaten abgeleiteten Bewegungsprofile in der erfindungsgemäß vorgesehenen Speichereinheit hinterlegt sind, so dass diese Bewegungsprofile später auch von dieser Speichereinheit abgerufen werden können, um bspw. für eine weitere Verarbeitung bzw. Auswertung zur Verfügung zu stehen.

Nach einer weiteren Ausführungsform des erfindungsgemäßen Ortungssystem ist die mindestens eine Auswerteeinheit dazu ausgelegt, das Bewegungsprofil an oder in der Nähe einer für das mindestens eine Einkaufsbehältnis vorgesehenen Abstellvorrichtung zu einem ersten Zeitpunkt, zu dem das Einkaufsbehältnis aus der Abstellvorrichtung entnommen wird bzw. gerade wurde, beginnen und an einer Kasse des Ladengeschäfts zu einem zweiten Zeitpunkt, an dem die in dem mindestens einen Einkaufsbehältnis temporär aufbewahrten Gegenstände an der Kasse bezahlt werden, enden zu lassen. Dabei wird zwischen dem ersten und zweiten Zeitpunkt das Einkaufsbehältnis, ohne bei der Abstellvorrichtung abgestellt zu werden, durch das Ladengeschäft bewegt. Eine derartige Abstellvorrichtung kann im Falle eines Einkaufskorbes bspw. ein kleines Regal sein, in welchem die Einkaufskörbe aufzustapeln sind. Im Falle von Einkaufswägen gibt es nahezu in jedem Ladengeschäft zwischenzeitlich besondere Systeme, in welche die Einkaufswägen nach Beendigung des Einkaufes ineinander zu schieben sind.

Das mindestens eine Auslesesystem definiert einen oder mehrere Erkennungsbereiche, wobei jeweils die Position des Transponders des mindestens einen Einkaufsbehältnisses immer dann zu erfassen ist, wenn der Transponder in den einen oder einen der mehreren Erkennungsbereiche kommt. In der Regel definiert das Auslesesystem mehrere Erkennungsbereiche, da das Auslesesystem in der Regel durch mehrere in dem Ladengeschäft verteilt angeordnete Ausleseeinheiten, bspw. in Form von Sensoren realisiert ist, wobei jeder dieser Sensoren mindestens einen Erkennungsbereich besitzt. Sobald das Einkaufsbehältnis in den Erkennungsbereich eines jeweiligen Sensors kommt, detektiert dieser Sensor das Einkaufsbehältnis über den an dem Einkaufsbehältnis angeordneten Transponder und kann damit jeweilig dessen Position bestimmen. Verlässt das Einkaufsbehältnis wiederum den Erkennungsbereich des jeweiligen Sensors und gelangt in den Erkennungsbereich eines weiteren Sensors, so wird dort von diesem weiteren Sensor wiederum die Position des Einkaufsbehältnisses über Detektion des Transponders bestimmt, so dass letztlich über eine Vielzahl derartiger Positionsdaten die Route bzw. das Bewegungsprofil des Einkaufsbehältnisses über die Zeit abgeleitet werden kann. Wenn das Einkaufsbehältnis aus der Aufbewahrungsvorrichtung entnommen wird, bewegt sich der Kunde, der das Einkaufsbehältnis zu seinem Einkauf nutzt, in der Regel in das Ladengeschäft hinein und gelangt damit je nach Anordnung der Ausleseeinheiten des Auslesesystems in den Erkennungsbereich eines der Ausleseeinheiten, wodurch das Einkaufsbehältnis über den an ihm angeordneten Transponder detektiert und somit seine Position zu diesem ersten Zeitpunkt als Positionsdatum bestimmt wird. Verlässt der Kunde zusammen mit dem Einkaufsbehältnis letztlich eine entsprechende Kasse, an der er die eingekauften Gegenstände bezahlt hat, so wird sein Bewegungsprofil an der entsprechenden Kasse mit der durch eine dort angeordnete Ausleseeinheit bestimmten Position zu diesem zweiten Zeitpunkt beendet. Es ist auch denkbar, das Bewegungsprofil an einem Ausgang mittels einer derart angeordneten Ausleseeinheit enden zu lassen.

Gemäß einer weiteren Ausführungsform des erfindungsgemäßen Ortungssystems umfasst das Ortungssystem des Weiteren eine Recheneinheit, die dazu ausgelegt ist, das von der mindestens einen Auswerteeinheit ermittelte Bewegungsprofil einer an der Kasse für die in dem mindestens einen Einkaufsbehältnisses temporär aufbewahrten Gegenstände erstellten Rechnung zuzuordnen. Über eine derartige Zuordnung von Bewegungsprofil zu entsprechender Rechnung können Bewegungsprofile von Kunden mit Umsatzdaten der Kassen aggregiert werden. Ferner ist es möglich, das Bewegungsprofil auch mit dem Kauf einzelner Produkte in Assoziation zu bringen, da eine Rechnung in der Regel die gekauften Produkte als einzelne Positionen auflistet. Das bedeutet, dass es nach Abschluss eines Kundenlaufs möglich ist, auszuwerten, wie viel Umsatz der entsprechende Kundenlauf generiert hat und welche Produkte gekauft wurden. Da bekannt ist, welche der gekauften Waren zuvor wo im Ladengeschäft zu finden waren, lässt sich anhand der Zuordnung von Rechnung zu Bewegungsprofil ein Rückschluss auf den Aufenthalt des jeweiligen Kunden ziehen. Dies ermöglicht dann auch Rückschlüsse auf ein Einkaufsverhalten von Kunden zu ziehen. Diese Daten bilden dann eine Grundlage für eine Vielzahl von Analysen, die es dem jeweiligen Inhaber des Ladengeschäfts bzw. einem Unternehmer eines größeren Unternehmens erlauben, mehr über das Verhalten von Kunden in dem jeweiligen Geschäft zu erfahren.

Die vorliegende Erfindung betrifft ferner ein Verfahren zur Bestimmung eines Bewegungsprofils mindestens eines zur temporären Aufbewahrung einzukaufender Gegenstände geeigneten Einkaufsbehältnisses innerhalb eines Ladengeschäfts. Dabei wird das mindestens eine Einkaufsbehältnis mit mindestens einem Transponder versehen, dessen Position von mindestens einem in dem Ladengeschäft angeordneten Auslesesystem dynamisch bestimmt wird, worüber das Bewegungsprofil mittels mindestens einer Auswerteeinheit abgeleitet wird.

Gemäß einer möglichen Ausführungsform des erfindungsgemäßen Verfahrens wird das mindestens eine Auslesesystem als integraler Bestandteil der mindestens einen Auswerteinheit gewählt und/oder mit dieser in kommunikative Verbindung gebracht.

Als Einkaufsbehältnis kann bspw. ein Einkaufswagen oder auch ein Einkaufskorb gewählt werden.

Als Transponder kann, wie voranstehend bereits beschrieben, bspw. ein aktiver Transponder oder auch ein passiver Transponder wie bspw. ein RFID tag gewählt werden. Im Falle eines RFID tags wird dessen Kennung durch das mindestens eine Auslesesystem dynamisch ausgelesen und darüber dessen Position dynamisch bestimmt.

In der Regel umfasst das mindestens eine Auslesesystem mehrere Ausleseeinheiten, die in dem Ladengeschäft in geeigneter Weise verteilt angeordnet werden. Dabei wird insbesondere mindestens eine Ausleseeinheit am Eingang, d.h. in der Nähe einer Abstellvorrichtung für die Einkaufsbehältnisse angeordnet, so dass, so bald ein Einkaufsbehältnis von einem Kunden aus der Abstellvorrichtung entnommen wird, dieser Kunde mitsamt dem Einkaufsbehältnis und dem daran angeordneten Transponder in den Detektionsbereich dieser ersten Ausleseeinheit gelangt und damit bereits zu Beginn eines Einkaufs die Position des entsprechenden Einkaufsbehältnisses bestimmt wird, quasi als Startpunkt für das Bewegungsprofil des Einkaufsbehältnisses. Ferner ist mindestens eine Ausleseeinheit in der Nähe der Kassen angeordnet bzw. ggf. an jeder Kasse eine Ausleseeinheit, so dass quasi als Endpunkt eines jeweiligen Bewegungsprofils die Position eines Einkaufsbehältnisses an der Kasse, an welcher die temporär in dem Einkaufsbehältnis aufbewahrten Gegenstände bezahlt werden, bestimmt wird.

Das Bewegungsprofil des mindestens einen Einkaufsbehältnisses wird ferner gemäß einer weiteren Ausführungsform des erfindungsgemäßen Verfahrens in einer Speichereinheit abrufbar hinterlegt.

Wie bereits voranstehend beschrieben, wird bspw. das Bewegungsprofil an oder in der Nähe einer für das mindestens eine Einkaufsbehältnis vorgesehenen Abstellvorrichtung zu einem ersten Zeitpunkt, an dem das Einkaufsbehältnis aus der Abstellvorrichtung entnommen wird, beginnen und an einer Kasse des Ladengeschäfts zu einem zweiten Zeitpunkt, an dem die in dem mindestens einen Einkaufsbehältnis temporär aufbewahrten Gegenstände an der Kasse bezahlt werden, enden gelassen. Dabei wird zwischen dem ersten und dem zweiten Zeitpunkt das Einkaufsbehältnis, ohne bei der Abstellvorrichtung abgestellt zu werden, durch das Ladengeschäft bewegt. Das von der mindestens einen Auswerteeinheit ermittelte Bewegungsprofil, wird sodann einer an der Kasse für die in dem mindestens einen Bewegungsbehältnis temporär aufbewahrten Gegenstände erstellten Rechnung zugeordnet. Darüber kann letztlich das Einkaufsprofil eines Kunden in Assoziation mit einer entsprechenden Rechnung bzw. einem Umsatz, den der jeweilige Kunde generiert hat, gebracht werden.

Wie bereits voranstehend beschrieben, definiert das mindestens eine Auslesesystem einen oder mehrere Erkennungsbereiche, wobei die Position des Transponders des mindestens einen Einkaufsbehältnisses immer dann erfasst wird, wenn der Transponder in den einen oder in einen der mehreren Erkennungsbereiche kommt. Das Bewegungsprofil ergibt sich dann durch die jeweiligen Positionen, die in chronologischer Abfolge entsprechend der Bewegung des Transponders bzw. des den Transponder tragenden Einkaufsbehältnisses bestimmt werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

Figur 1 zeigt eine schematische Darstellung eines Ladengeschäfts in welchem eine Ausführungsform des erfindungsgemäßen Ortungssystems zum Einsatz kommt.

Figur 2 zeigt einen zeitlichen Ablauf einer gemäß einer Ausführungsform des erfindungsgemäßen Verfahrens vorgenommene Zuordnung von Rechnung zu Einkaufsbehältnis.

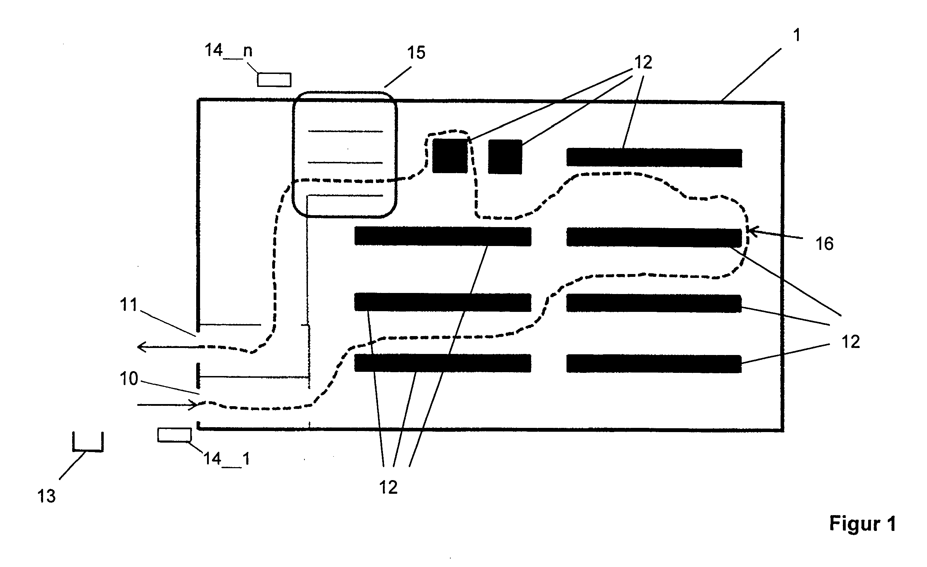

Figur 1 zeigt ein Ladengeschäft 1, bei welchem es sich bspw. um eine Supermarktfiliale handeln kann. Die Supermarktfiliale 1 besitzt einen Eingang 10 sowie einen Ausgang 11. In der Supermarktfiliale sind mehrere Regale 12 angeordnet. Am Eingang 10 befindet sich ferner eine Abstellvorrichtung 13 für zum Einkauf von Gegenständen geeigneten Einkaufsbehältnissen. Ferner befindet sich in der Nähe des Eingangs 10, hier beispielhaft direkt an der Eingangstür 10 eine Ausleseeinheit 14_1, die Teil eines Auslesesystems 14 darstellt, das aus einer Mehrzahl von Ausleseeinheiten 14_x besteht, die in geeigneter Weise in dem Ladengeschäft 1 verteilt angeordnet sind. Eine das System quasi abschließende Ausleseeinheit 14_n ist im Kassenbereich 15 angeordnet. Kommt nun ein Käufer zum Eingang 10, so nimmt er ein Einkaufsbehältnis aus der Aufbewahrungsvorrichtung 13 und begibt sich damit durch den Eingang in den Innenraum des Ladengeschäfts 1. Bei Durchgang durch den Eingang 10 wird anhand der Ausleseeinheit 14_1 ein auf dem Einkaufsbehältnis befindlicher Transponder sensorisch detektiert und darüber die Position des Einkaufsbehältnisses, nämlich am Eingang 10, bestimmt. Indirekt wird damit auch die Position des das Einkaufsbehältnis nutzenden Einkäufers bestimmbar. Bewegt sich nun der Einkäufer mit den Einkaufsbehältnis, wie durch die gestrichelte Linie dargestellt, auf einer Route 16 durch das Ladengeschäft 1, so wird er stets, sobald er in einen Detektionsbereich einer Ausleseeinheit 14_x gelangt, von dieser Ausleseeinheit sensorisch detektiert, so dass darüber die Position zunächst des Einkaufsbehältnisses und darüber indirekt auch die Position des Einkäufers bestimmt werden kann. Die Ausleseeinheiten 14_x sind nunmehr in geeigneter Weise über das Ladengeschäft 1 verteilt, so dass durch chronologische Bestimmung der Positionen des Einkaufsbehältnisses beim Durchgang des Einkaufsbehältnisses bzw. des Einkäufers durch das Ladengeschäft 1 bis zum Kassenbereich 15, wo die Position final durch eine dort angeordnete Ausleseeinheit 14_n bestimmt wird, ein Bewegungsprofil des Einkaufsbehältnisses dynamisch erstellt wird. Das Bewegungsprofil entspricht damit der in gestrichelter Linie dargestellten Route 16, endet jedoch in der Regel im Kassenbereich 15 und nicht, wie hier dargestellt, erst am Ausgang 11. Wie bereits erwähnt, kann es sich bei den Ausleseeinheiten 14_x, die zusammen das Auslesesystem 14 bilden, jeweilig um geeignete Sensoren handeln, die einen an einem jeweiligen Einkaufsbehältnis angeordneten Transponder sensorisch detektieren können. Bei dem Einkaufsbehältnis kann es sich zum einen um einen Einkaufswagen oder aber auch um einen Einkaufskorb handeln. Der daran angeordnete Transponder kann ein aktiver oder ein passiver Transponder sein, wie bspw. ein sogenannter RFID tag. Im Kassenbereich 15 sind in der Regel ein oder mehrere Kassen angeordnet. Jedem Einkaufsbehältnis, in welchem ein Einkäufer beim Durchgang durch das Ladengeschäft einzukaufende Gegenstände temporär aufbewahrt, kann an einer jeweiligen Kasse im Kassenbereich 15 eine für die in dem Einkaufsbehältnis bis dahin temporär aufbewahrten und einzukaufenden Gegenstände erstellte Rechnung zugeordnet werden. Indirekt erfolgt damit auch eine Zuordnung zu dem das Einkaufsbehältnis tragenden bzw. schiebenden Einkäufer. Ferner ist die Rechnung auch dem Bewegungsprofil zuordenbar, so dass sich darüber die Möglichkeit ergibt, Rückschlüsse bzw. Schlussfolgerungen zu ziehen, die sich ggf. zwischen den Bewegungsprofilen und der Rechnung bzw. dem Umsatz ergeben.

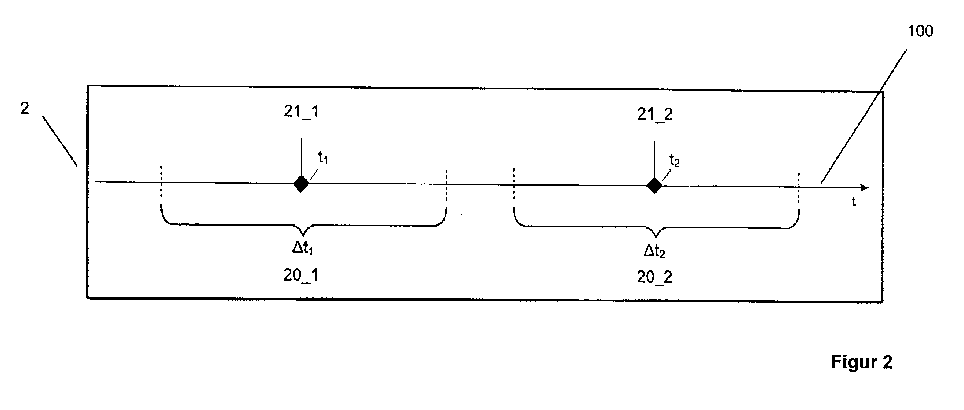

Figur 2 zeigt einen beispielhaften zeitlichen Ablauf zur Rechnungsstellung an einer Kasse 2. Auf einem Zeitstrahl 100 lässt sich der zeitliche Verlauf darstellen. Zu einem Zeitpunkt t₁ kommt ein Einkaufswagen 20_1 an die Kasse 2 und verweilt dort für eine Verweildauer Δt₁, so dass dort für die in dem Einkaufswagen 20_1 befindlichen Gegenstände letztlich eine Rechnung 21_1 erstellt wird. Zu einem nachfolgendem Zeitpunkt t₂ kommt ein zweiter Einkaufswagen 20_2 in den Bereich der Kasse 2 und verweilt im Kassenbereich für eine Verweildauer Δt₂, so dass dann eine Rechnung 21_2 für die Gegenstände erstellt werden kann, die sich im Einkaufswagen 20_2 befanden. Somit kann jedem Einkaufswagen 20_i eine entsprechende Rechnung 21_i zugeordnet werden. Da durch das erfindungsgemäße vorgesehene Auslesesystem und einer damit verbunden Auswerteeinheit ein Bewegungsprofil für jeden der Einkaufswägen 20_i erstellt wurde, kann dieses jeweilige Bewegungsprofil der entsprechenden Rechnung 21_i zugeordnet werden.

Allerdings ist festzustellen, dass eine Ermittlung des Bewegungsprofils über das Auslesesystem in Zusammenarbeit mit der Auswerteeinheit unabhängig ist zu einer Erstellung von Rechnungen mittels eines Abrechnungssystems einer jeweiligen Kasse. Um eine Zuordnung zwischen den jeweiligen Bewegungsprofilen und den jeweiligen entsprechenden Rechnungen machen zu können, muss eine Zuordnung über einen Zeitpunkt t₁ bzw. t₂ einer Rechnungsstellung und einer Verweildauer Δt₁ bzw. Δt₂ eines jeweiligen Einkaufwagens 20_1 bzw. 20_2 im jeweiligen Kassenbereich mittels einer ferner erfindungsgemäß vorgesehenen Recheneinheit ermittelt werden. In der in Figur 2 gezeigten Darstellung tätigt jeder Kunde einen Einkauf mit einem Wagen 20_1 bzw. 20_2. Ferner überlappt die Verweildauer Δt₁ von Wagen 20_1 nicht mit der Verweildauer Δt₂ von Wagen 20_2. Dadurch wird die Zuordnung von Rechnungen 21_1 bzw. 21_2 zu einem jeweiligen Bewegungsprofil der Einkaufswägen 20_1 bzw. 20_2 einfach. In der Praxis gibt es jedoch mehr Möglichkeiten, wie jeweilige Rechnungen jeweiligen Bewegungsprofilen zugeordnet werden können. Es ergeben sich in der Praxis folgende Möglichkeiten, wie Rechnungen auf Bewegungsprofile verteilt sein können:
a) ein Einkaufsbehältnis erzeugt eine Rechnung
b) ein Einkaufsbehältnis erzeugt keine Rechnung
c) ein Einkaufsbehältnis erzeugt viele Rechnungen
d) ein Käufer ohne Einkaufsbehältnis erzeugt eine Rechnung
e) viele Einkaufsbehältnisse erzeugen eine Rechnung

Des weiteren können mehrere Einkaufsbehältnisse gleichzeitig an einer Kasse stehen, was eine Zuordnung zwischen Rechnung bzw. Rechnungen und Bewegungsprofil nochmals erschwert. Die Wahrscheinlichkeit, dass ein Verweilzeitraum mehrerer Einkaufsbehältnisse im gleichen Kassenbereich überlappt, kann dadurch verringert werden, dass der Kassenbereich möglichst klein definiert wird. Dies setzt allerdings eine gewisse Genauigkeit des Ortungssystems voraus. Um eine Zuordnung von Bewegungsprofilen zu Rechnungen realisieren zu können, gibt es im Prinzip zwei Möglichkeiten. Gemäß einer ersten Möglichkeit werden den Bewegungsprofilen nur diejenigen Rechnungen zugeordnet, die sich aufgrund von Verweilzeitraum und dem Zeitpunkt der Rechnungserstellung für ein jeweiliges Einkaufsbehältnis eineindeutig ergeben. Dabei bedeutet eineindeutig, das sowohl eine Rechnung eindeutig einem Bewegungsprofil als auch ein Bewegungsprofil eindeutig einer Rechnung zugeordnet werden kann. Gemäß einer zweiten Möglichkeit können neben dem Verweilzeitraum der Einkaufsbehältnisse in einem jeweiligen Kassenbereich noch weitere Faktoren in eine Zuordnung zwischen Bewegungsprofil und Rechnung mit einbezogen werden, wie bspw. eine Anzahl von Positionen auf einer jeweiligen Rechnung. So kann bspw. eine Rechnung mit vielen Positionen einem Bewegungsprofil zugeordnet werden, dessen dazugehöriges Einkaufsbehältnis sich längere Zeit im Kassenbereich befand.

## Patentansprüche

1. Ortungssystem zur Bestimmung eines Bewegungsprofils mindestens eines zur temporären Aufbewahrung einzukaufender Gegenstände geeigneten Einkaufsbehältnisses innerhalb eines Ladengeschäfts (1), wobei das mindestens eine Einkaufsbehältnis mit mindestens einem Transponder versehen ist, dessen Position von mindestens einem in dem Ladengeschäft (1) angeordneten Auslesesystem (14) dynamisch zu bestimmen ist, worüber das Bewegungsprofil mittels mindestens einer Auswerteeinheit abzuleiten ist.

2. Ortungssystem nach Anspruch 1, bei dem das mindestens eine Auslesesystem (14) einen integralen Bestandteil der mindestens einen Auswerteeinheit darstellt und/oder mit dieser in kommunikativer Verbindung steht.

3. Ortungssystem nach Anspruch 1 oder 2, bei dem das mindestens eine zur temporären Aufbewahrung einzukaufender Gegenstände geeignete Einkaufsbehältnis ein Einkaufswagen oder ein Einkaufskorb ist.

4. Ortungssystem nach einem der voranstehenden Ansprüche, bei dem das Auslesesystem (14) zusammen mit dem Transponder ein Ultrabreitband Positionierungssystem bildet, das aktive Tags verwendet.

5. Ortungssystem nach einem der Ansprüche 1 bis 3, bei dem der Transponder ein RFID Tag ist, dessen Kennung durch das mindestens eine Auslesesystem (14) dynamisch auszulesen und darüber dessen Position dynamisch zu bestimmen ist.

6. Ortungssystem nach einem der voranstehenden Ansprüche, bei dem das mindestens eine Auslesesystem (14) mehrere Ausleseeinheiten (14_1, ..., 14_n) umfasst, die in dem Ladengeschäft (1) in geeigneter Weise verteilt angeordnet sind.

7. Ortungssystem nach einem der voranstehenden Ansprüche, das ferner eine Speichereinheit umfasst, in der das Bewegungsprofil des mindestens einen Einkaufsbehältnisses abrufbar zu hinterlegen ist.

8. Ortungssystem nach einem der voranstehenden Ansprüche, bei dem die mindestens eine Auswerteeinheit dazu ausgelegt ist, das Bewegungsprofil an oder in der Nähe einer für das mindestens eine Einkaufsbehältnis vorgesehenen Abstellvorrichtung (13) zu einem ersten Zeitpunkt, an dem das Einkaufsbehältnis aus der Abstellvorrichtung (13) entnommen wird, beginnen und an einer Kasse des Ladengeschäfts (1) zu einem zweiten Zeitpunkt, an dem die in dem mindestens einen Einkaufsbehältnis temporär aufbewahrten Gegenstände an der Kasse bezahlt werden, enden zu lassen, wobei zwischen dem ersten und dem zweiten Zeitpunkt das Einkaufsbehältnis, ohne bei der Abstellvorrichtung (13) abgestellt zu werden, durch das Ladengeschäft (1) bewegt wird.

9. Ortungssystem nach Anspruch 8, das ferner eine Recheneinheit umfasst, die dazu ausgelegt ist, das von der mindestens einen Auswerteeinheit ermittelte Bewegungsprofil einer an der Kasse für die in dem mindestens einen Einkaufsbehältnis temporär aufbewahrten Gegenstände erstellten Rechnung zuzuordnen.

10. Ortungssystem nach einem der voranstehenden Ansprüche, bei dem das mindestens eine Auslesesystem (14) einen oder mehrere Erkennungsbereiche definiert und die Position des Transponders des mindestens einen Einkaufbehältnisses immer dann zu erfassen ist, wenn der Transponder in den einen oder in einen der mehreren Erkennungsbereiche kommt.

11. Verfahren zur Bestimmung eines Bewegungsprofils mindestens eines zur temporären Aufbewahrung einzukaufender Gegenstände geeigneten Einkaufsbehältnisses innerhalb eines Ladengeschäfts, wobei das mindestens eine Einkaufsbehältnis mit mindestens einem Transponder versehen wird, dessen Position von mindestens einem in dem Ladengeschäft angeordneten Auslesesystem dynamisch bestimmt wird, worüber das Bewegungsprofil mittels mindestens einer Auswerteeinheit abgeleitet wird.

12. Verfahren nach Anspruch 11, bei dem das mindestens eine Auslesesystem als integraler Bestandteil der mindestens einen Auswerteeinheit gewählt wird und/oder mit dieser in kommunikative Verbindung gebracht wird.

13. Verfahren nach Anspruch 11 oder 12, bei dem das mindestens eine zur temporären Aufbewahrung einzukaufender Gegenstände geeignete Einkaufsbehältnis als Einkaufswagen oder als Einkaufskorb gewählt wird.

14. Verfahren nach einem der Ansprüche 11 bis 13, bei dem der Transponder als ein RFID Tag gewählt wird, dessen Kennung durch das mindestens eine Auslesesystem dynamisch ausgelesen und darüber dessen Position dynamisch bestimmt wird.

15. Verfahren nach einem der Ansprüche 11 bis 14, bei dem das mindestens eine Auslesesystem mehrere Ausleseeinheiten umfasst, die in dem Ladengeschäft in geeigneter Weise verteilt angeordnet werden.

16. Verfahren nach einem der Ansprüche 11 bis 15, bei dem das Bewegungsprofil des mindestens einen Einkaufsbehältnisses in einer Speichereinheit abrufbar hinterlegt wird.

17. Verfahren nach einem der Ansprüche 11 bis 16, bei dem das Bewegungsprofil an oder in der Nähe einer für das mindestens eine Einkaufsbehältnis vorgesehenen Abstellvorrichtung zu einem ersten Zeitpunkt, an dem das Einkaufsbehältnis aus der Abstellvorrichtung entnommen wird, beginnen und an einer Kasse des Ladengeschäfts zu einem zweiten Zeitpunkt, an dem die in dem mindestens einen Einkaufsbehältnis temporär aufbewahrten Gegenstände an der Kasse bezahlt werden, enden gelassen wird, wobei zwischen dem ersten und dem zweiten Zeitpunkt das Einkaufsbehältnis, ohne bei der Abstellvorrichtung abgestellt zu werden, durch das Ladengeschäft bewegt wird.

18. Verfahren nach Anspruch 17, bei dem das von der mindestens einen Auswerteeinheit ermittelte Bewegungsprofil einer an der Kasse für die in dem mindestens einen Einkaufsbehältnis temporär aufbewahrten Gegenstände erstellten Rechnung zugeordnet wird.

19. Verfahren nach einem der Ansprüche 11 bis 18, bei dem das mindestens eine Auslesesystem einen oder mehrere Erkennungsbereiche definiert und die Position des Transponders des mindestens einen Einkaufbehältnisses immer dann erfasst wird, wenn der Transponder in den einen oder in einen der mehreren Erkennungsbereiche kommt.
